# EUROPEAN PATENT APPLICATION

(11) **EP 2 851 578 A1**
(43) Date of publication of application: **25.03.2015**
(21) Application number: 12731508.3
(22) Date of filing: 18.05.2012
(51) Int. Cl.: F16F 9/02

(54) **GAS SPRING COMPRISING A SYSTEM FOR DELAYING THE RETURN OF THE ROD**

(71) Applicant: Azol-Gas, S. L., 01015 Vitoria, Álava (ES)
(72) Inventor: ESTIRADO, Félix, E-01015 Vitoria (Álava) (ES)
(74) Representative: Pons Ariño, Angel
(86) International application number: PCT/ES2012/070352
(87) International publication number: WO 2013/171349

(57) **Abstract**

The invention relates to a gas spring comprising a system for delaying the return of the rod, which allows the rod to perform its upward or return movement at very slow speeds and in a controlled manner due to the presence of an intermediate chamber defined inside the rod of the spring. The intermediate chamber communicates with a first chamber and a second chamber respectively via a first narrowing and a second narrowing in the rod, such that the gas passes from the second chamber to the first chamber when the rod moves in the direction in which it is extracted from the body of the spring.

## Description

### OBJECT OF THE INVENTION

The present invention belongs to the field of gas springs and, more specifically, to the field of gas springs with rod return retarding system.

The object of the invention consists of a gas spring with rod return retarding system which allows very slow rise or return speeds of the rod in a controlled manner.

### BACKGROUND OF THE INVENTION

Gas springs comprising a rod that moves inside a gas chamber formed in the interior of a body where the rod is housed are known in the state of the art.

In the case of gas springs commonly used in dies destined for cutting and stamping metal parts, said springs support the upper parts of the dies when these are retracted, in such a manner that, due to their elasticity when the die is being used, the press is capable of overcoming the force exerted by these and working normally.

In order to fulfil their function when the dies are retracted, said springs are usually high-strength and have long stroke lengths. When the die is mounted onto the press, the springs are compressed and extended in each cycle and, given the characteristics of high strength and long stroke length thereof, their useful life is shortened when it is not really necessary for these to function. As a result, when the springs must actually fulfil their function they are in no condition to do so due to the fatigue to which their components have been subjected. Therefore, it is interesting to use rod return retarding systems so that the rod does not have time to complete a full cycle when not required to do so, in such a manner that it has a shorter useful stroke length and, thus, less fatigue.

Gas springs with retarded rod return have been used for some time, which incorporate a gas throttle to achieve said effect. However, in order to achieve the highest possible degree of retardation in order to shorten the useful stroke length of the rod to the extent possible, such a small degree of throttle would be required that it is not economically or even mechanically feasible with currently known systems.

### DESCRIPTION OF THE INVENTION

The present invention relates to a gas spring having a rod return retarding system comprising a rod that moves in the interior of a body. In turn, the rod comprises a piston that defines two chambers in the interior of the body where the gas is housed, a first chamber formed by the volume comprised between the body and the lower side of the piston and a second chamber formed by the volume comprised between the body, the outer contour of the rod and the upper side of the piston.

In turn, the piston comprises an anti-return device which allows the free passage of gas from the first chamber to the second chamber when the rod moves in the direction of insertion in the gas spring body, in such a manner that there is the same pressure in the first chamber as in the second chamber. When the rod moves in the opposite direction, i.e. in the direction of extraction of the gas spring body rod, the anti-return device prevents the passage of gas between the second chamber and the first chamber.

In order to carry out the passage of gas from the second chamber to the first chamber when the rod moves in the direction of extraction, the rod also comprises an intermediate chamber defined in the interior thereof connected to the first and the second chamber by means of a first and second throttle, respectively, in the rod.

Therefore, upon return of the rod in the interior of the body or, in other words, upon extraction of said rod from the gas spring body, the gas passes from the second chamber to the intermediate chamber by means of the second throttle and from the intermediate chamber to the first chamber by means of the first throttle.

This serial layout of the first and second throttle, placing the first and second chamber in contact with the intermediate chamber, multiplies by ten the retardation achieved compared to the retardation obtained in the devices of the state of the art that only include one throttle between the first chamber and the second chamber.

The existence of the intermediate chamber allows the difference in pressure to be maintained for a longer period of time than in the case of the spring with a single throttle between the first chamber and the second chamber, as each throttle allows a difference in pressure to be maintained between the chambers it interconnects, i.e. between the second chamber and the intermediate chamber, and between the intermediate chamber and the first chamber, due to the limitation in gas flow caused by each throttle.

### DESCRIPTION OF THE DRAWINGS

In order to complete the description being made and with the object of helping to better understand the characteristics of the invention, in accordance with a preferred practical embodiment thereof, said description as an integral part thereof, is a set of drawings wherein the following is represented in an illustrative and non-limiting manner:

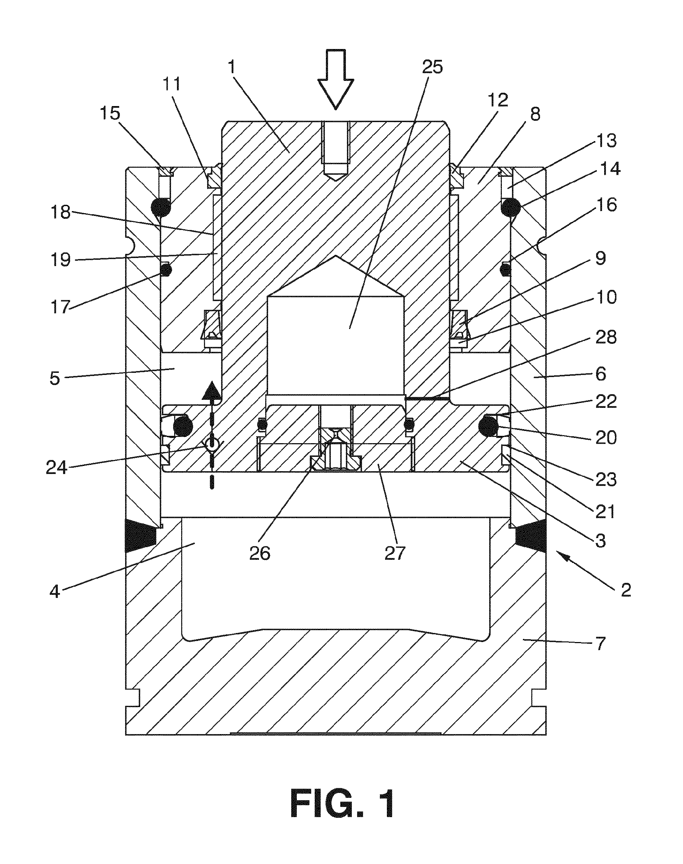

Figure 1. Shows a cross-sectional view of the gas spring with rod retarding system in a position wherein the rod moves in the direction of insertion in the gas spring body.

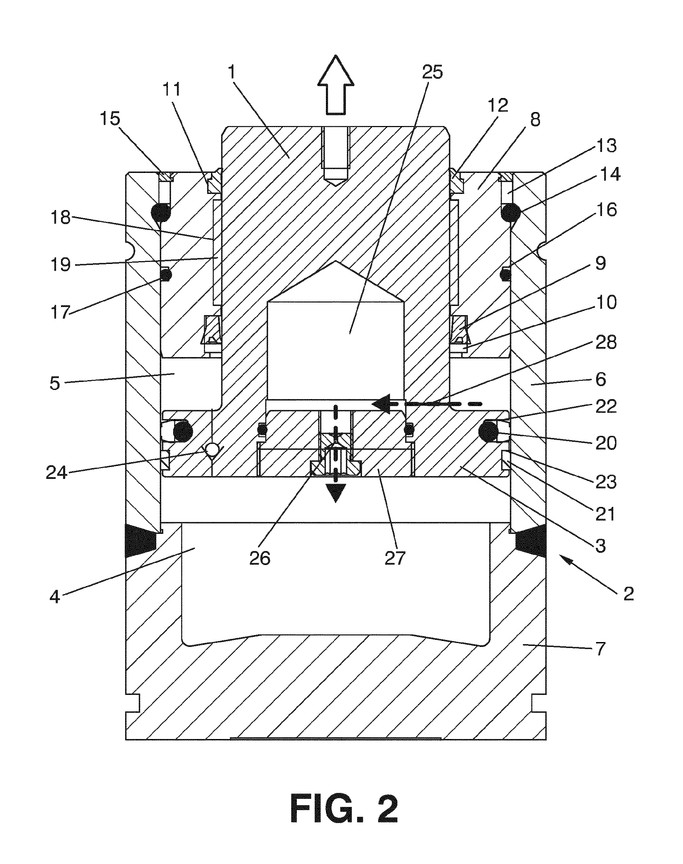

Figure 2. Shows a cross-sectional view of the gas spring with rod retarding system of figure 1 in a position wherein the rod moves in the direction of extraction of the gas spring body.

### PREFERRED EMBODIMENT OF THE INVENTION

Following is a detailed description, in relation to the foregoing drawings, of the gas spring with rod retarding system of the present invention.

The gas spring comprises a rod (1) movable in the interior of a body (2), said rod (1) comprising a piston (3) that defines two chambers in the interior of the body (2) that house the gas, a first chamber (4) formed by the volume comprised between the body (2) and the lower side of the piston (3) and a second chamber (5) formed by the volume comprised between the body (2), the outer contour of the rod (1) and the upper side of the piston (3).

The body (2) is formed by a central casing (6), a base (7) joined to the central casing (6) by one of its ends and a plug (8) that closes the body (2) by the opposite end and is disposed in the radial space comprised between the rod (1) and the body (2).

The plug (8), which has annular shape, comprises a first inner recess (10) where a first sealing element (9) is disposed adjacent to the rod (1).

The plug (8) also comprises a second inner recess (11) which houses a scraper (12) that prevents the particles or fluids from entering the interior of the gas spring.

The plug (8) also comprises a first outer recess (13) which allows housing of both a locking ring (14) by way of a protection ring (15) that prevents particles from entering between the plug (8) and the gas spring body (2) and a second outer recess (16) that houses an O-ring (17) which enables sealing of the joint between the plug (8) and the gas spring body (2).

Between the second inner recess (11) and the first inner recess (10), the plug (8) can comprise a third inner recess (18) which enables housing of a bushing (19) that facilitates the movement of the rod (1) in the interior of the gas spring body (2).

The piston (3) of the rod (1) comprises recess (22, 23) which house the second sealing element (20) that ensure tightness and prevent the passage of gas between the first chamber (4) and the second chamber (5), and a guiding element (21) that favours the movement of the rod (1) in the interior of the body (2).

In turn, the piston (3) comprises an anti-return device (24) which allows the free passage of gas from the first chamber (4) to the second chamber (5) when the rod (1) moves in the direction of insertion in the gas spring body (2) and prevents the passage of gas from the second chamber (5) to the first chamber (4) when the rod (1) moves in the direction of extraction of the gas spring body (2).

In order to carry out the passage of gas from the second chamber (5) to the first chamber (4) when the rod (1) moves in the direction of extraction, the rod (1) comprises an intermediate chamber (25) defined in the interior thereof where it is connected to the first chamber (4) by means of a first throttle (26).

Said first throttle (26) is disposed in the piston (3) in an axial direction, for example by means of machining, or the piston can comprise an interchangeable perforated cap (27) where the first throttle (26) is disposed, allowing variation in the diameter of said first throttle (26).

The intermediate chamber (25) is also connected to the second chamber (5) by means of a second throttle (28) disposed in a radial direction in the rod (1).

Preferably, the diameter of the first throttle (26) is smaller than that of the second throttle (28).

The gas flow, which is determined by the movement of the rod in relation to the gas spring body, is represented by dashed arrows.

## Claims

1. Gas spring with rod return retarding system comprising a rod (1) movable in the interior of a body (2), where said rod (1) comprises, in turn, a piston (3) that defines in the interior of the body (2) a first chamber (4) and a second chamber (5) wherein the gas is housed, **characterised in that** the rod (1) further comprises an intermediate chamber (25) defined in the interior thereof connected to the first chamber (4) and to the second chamber (5) by means of a first throttle (26) and a second throttle (28), respectively, disposed in the rod (1), in order to carry out the passage of gas from the second chamber (5) to the first chamber (4) when the rod (1) moves in the direction of extraction of the spring body (2).

2. Gas spring with rod return retarding system, according to claim 1, **characterised in that** the first throttle (26) is disposed in the piston (3) in an axial direction.

3. Gas spring with rod return retarding system, according to claim 2, **characterised in that** the first throttle (26) is disposed in a perforated cap (27) disposed in the piston (3).

4. Gas spring with rod return retarding system, according to claim 3, **characterised in that** the perforated cap (27) is interchangeable.

5. Gas spring with rod return retarding system, according to any of the preceding claims, **characterised in that** the second throttle (28) is disposed in the rod (1) in a radial direction.

6. Gas spring with rod return retarding system, according to any of the preceding claims, **characterised in that** the piston (3) comprises an anti-return device (24) which allows gas to pass freely from the first chamber (4) to the second chamber (5) when the rod (1) moves in the direction of insertion of the gas spring body (2) and prevents the passage of gas from the second chamber (5) to the first chamber (4) when the rod (1) moves in the direction of extraction of the gas spring body (2).

7. Gas spring with rod return retarding system, according to any of the preceding claims, **characterised in that** the first chamber (4) is formed by the volume comprised between the body (2) and the lower side of the piston (3), and the second chamber (5) is formed by the volume comprised between the body (2), the outer contour of the rod (1) and the upper side of the piston (3).

8. Gas spring with rod return retarding system, according to any of the preceding claims, **characterised in that** the body (2) is formed by a central casing (6), a base (7) joined to the central casing (6) by one of its ends, and a plug (8) that seals the body (2) by the opposite end and is disposed in the radial space comprised between the rod (1) and the body (2).

9. Gas spring with rod return retarding system, according to claim 8, **characterised in that** the plug (8) has annular shape.

10. Gas spring with rod return retarding system, according to claim 9, **characterised in that** the plug (8) comprises a first inner recess (10) wherein a first sealing element (9) is disposed adjacent to the rod (1).

11. Gas spring with rod return retarding system, according to claim 9, **characterised in that** the plug (8) comprises a second recess (11) wherein a scraper (12) is housed.

12. Gas spring with rod return retarding system, according to claim 9, **characterised in that** the plug (8) comprises a first outer recess (13) which allows housing of both a locking ring (14) and a protection ring (15) to prevent the particles from entering between the plug (8) and the gas spring body (2) and a second outer recess (16) which enables housing of an O-ring (17) to seal the joint between the plug (8) and the gas spring body (2).

13. Gas spring with rod return retarding system, according to claims 10 and 11, **characterised in that** the plug (8) comprises a third inner recess (18) disposed between the second inner recess (11) and the first inner recess (10) to house the bushing (19) that facilitates the movement of the rod (1) along the interior of the gas spring body (2).

14. Gas spring with rod return retarding system, according to any of the previous claims, **characterised in that** the piston (3) of the rod (1) comprises recesses (22, 23) wherein a second sealing element (20) and a guiding element (21) are housed.

15. Gas spring with rod return retarding system, according to any of the preceding claims, **characterised in that** the diameter of the first throttle (26) is smaller than that of the second throttle (28).
